# EUROPEAN PATENT APPLICATION

(11) **EP 1 686 370 A1**
(43) Date of publication of application: **02.08.2006**
(21) Application number: 05106194.3
(22) Date of filing: 07.07.2005
(51) Int. Cl.: G01N 27/447

(54) **Electrode for controlling and monitoring gel strips individually**

(71) Applicant: Agilent Technologies, Inc., Palo Alto, CA 94306 (US)
(72) Inventor: Zimmermann, Hans-Peter, 76227, Karlsruhe (DE); Brombacher, Volker, 75327, Pfinztal (DE)
(74) Representative: Barth, Daniel Mathias

(57) **Abstract**

An electrode for a gel electrophoresis device (100), the electrode comprising a first electrode member (203) in which individual contacts (702) are arranged and adapted to provide an electrical contact with at least two gel strips (500) received in gel strip receptions (401) individually so that each electrical signal of the at least two gel strips (500) is controllable and/or monitorable separately.

## Description

### BACKGROUND ART

The present invention relates to an electrode for a gel electrophoresis device.

Electrophoresis is a method to analyze complex mixtures of substances, for instance biological substances like proteins. By electrophoresis, a mixture of different substances may be separated by taking into account the intrinsic charge characteristics of the substances, particularly different isoelectric points of different substances. For an electrophoresis analysis, an analyt may be inserted in a gel strip, and then an electric field is applied along the gel strip so that the electrically charged molecules are separated based on their different electric charges. Along an extension of a gel strip for electrophoresis, a gradient of the local pH value may be generated so that a component having a particular isoelectric point moves along the gel strip and is stopped at a characteristic position and thus pH value of the gel strip, in accordance with the isoelectric point of this component.

US 5,989,400, US 6,113,766 and US 6,599,410 B1 disclose devices for gel electrophoresis.

In conventional gel electrophoresis as described above, substances of an analyt are separated into different fractions which are spatially separated along the extension of the gel strip.

WO 01/86279 A1 and WO 03/019172 A2 disclose an alternative electrophoresis method, wherein a plurality of compartments containing a solution are arranged above a gel strip. After having separated the different fractions of the analyt by applying an electric field, a fraction of substances stopped at a particular position along the gel strip is accumulated in a solution contained in an adjacent one of the plurality of compartments. In comparison to the above-mentioned conventional electrophoresis which may also be denoted as "in-gel electrophoresis" in this specification, the approach of WO 01/86279 A1 and WO 03/019172 A2 may also be denoted as "off-gel electrophoresis" in this specification, since the separated components may be provided off the gel.

### DISCLOSURE

It is an object of the invention to enable improved gel electrophoresis. The object is solved by the independent claims. Exemplary embodiments are shown by the dependent claims.

According to an exemplary embodiment of the present invention, an electrode arrangement for a gel electrophoresis device is provided, the electrode arrangement comprising a first electrode member adapted to provide an electrical contact with at least two gel strips (which may be received in a gel electrophoresis device) individually (particularly in a manner that an electrical field at one strip may differ from an electrical field at another strip) so that each electrical signal (for instance an electric signal which is externally applied to a gel strip or an electric response signal of a gel strip) of the at least two gel strips is controllable and/or monitorable separately (particularly free from an influence originating from other gel strips).

According to another exemplary embodiment of the present invention, a gel electrophoresis device is provided, comprising an electrode arrangement having the above-mentioned features.

According to still another exemplary embodiment of the present invention, a method of operating a gel electrophoresis device is provided, the method comprising the steps of receiving gel strips in at least two gel strip receptions of a carrier element, and electrically contacting the at least two gel strips individually so that each electrical signal of the at least two gel strips is controllable and/or monitorable separately.

According to an exemplary embodiment of the invention, an electrode member contacting a plurality of gel strips in a gel electrophoresis device may be circuited in such a manner that each of at least a part of gel strips may be contacted individually and independently from the remaining gel strips, so that controlling and/or monitoring of electric properties (for instance electric voltages or electric fields applied to a gel strip or measured at a gel strip, respectively) of a particular gel strip may be performed independently from influences of other gel strips. Thus, not only the sum or an average value of parameters indicative of the electric configuration of the gel strips of a multi gel strip measurement may be determined or evaluated, but an individual controlling or monitoring of a single gel strip's electric configuration may be carried out. This may provide a user with additional information about the frame condition of an analysis about the experimental process, and about the results of an analysis.

The opportunity to pre-set and receive parameters indicative of the electrical properties of a particular gel strip individually may be advantageous in a scenario, in which a gel electrophoresis device is operated with a plurality of gel strips, and a first part of the gel strips is used for carrying out an "in-gel" analysis, and a second part of the gel strips are used for carrying out an "off-gel" analysis, since these types of electrophoresis may make it necessary or desirable to use different electric field configurations or values. Also during the analysis of different samples in different gel strips simultaneously it may be necessary or desirable to carry out the different experiments with different sets of electric parameters or to detect electric parameters indicative of differences in the experiments running in different gel strips. Such electrical parameters may be used for controlling, regulating and/or evaluating electrophoresis experiments in a multi gel strip gel electrophoresis device.

According to an embodiment of the invention, one or two contacts of a gel strip may be electrically decoupled from contacts of at least a part of the remaining gel strips so as to electrically configure the gel strip autarchic from the environment.

For an electrophoresis analysis using the electrophoresis system according to an exemplary embodiment of the invention, a gel strip may first be hydrated, wherein a pH gradient may be present along an extension of the gel strip as a basis for isoelectric focussing of an analyt to be investigated. One or more of such gel strips may be inserted in corresponding receptions of the insert element. Along the extension of the inserted gel strips, an electric field may be applied to the gel strips individually by means of contacting electrode members of the gel electrophoresis device which are brought to a defined electric potential. Such electrode members may be directly electrically coupled to the gel strips or may be dipped in electrolyte containing cavities of compartment frames which may or may not be brought in functional contact with the gel strips. As a result of the generated electric field, an electric force takes effect on charged components of an analyt in the gel strip. Thus, components of the analyt like proteins are moved along the gel strip. Furthermore, the components to be separated are stopped to remain at respective positions of the gel strip, such positions being defined by the charge properties of the component in combination with the spatially dependent pH gradient of the gel strip.

For an "in-gel" operation mode of the gel electrophoresis device, different fractions of components of the analyt being accumulated at different positions within the gel strip are recovered from the gel strip for instance by cutting a corresponding portion of the gel strip and by dissolving the component located at a particular position in a liquid solution. No compartment frames are necessary for an "in-gel" analysis.

When connecting an electrode member to a gel strip in the gel electrophoresis device being operated in the "in-gel" operation mode, the electric contacts of the electrode member may contact a portion, particularly an end portion, of the gel strip. Electric contacts of another electrode member may contact another portion, particularly another end portion, of the gel strip. Then, an electric signal (for instance a constant electric voltage or a constant electric current, or a voltage or current pattern) may applied to the gel strip independently from electric signals applied to at least a part of contacts of at least a part of other gel strips received or receivable in the gel electrophoresis device. Additionally or alternatively, an electric signal (for instance the time-dependence of an electric voltage or an electric current) of the gel strip may be measured independently from electric signals measured at at least a part of contacts of at least a part of other gel strips received or receivable in the gel electrophoresis device.

For an "off-gel" operation mode of the gel electrophoresis device, the carrier element having received gel strips therein, may be provided with compartment frames which may be filled with a liquid which may have electrically conductive properties. Such compartment frames may be mounted above, below or laterally with respect to the gel strip, however in functional (fluid) connection therewith. The electrodes member(s) may be contacted directly with the gel strip or with electrical contacts provided at (end) portions of the gel strips. Alternatively, the electrode members may contact the compartment frames, particularly electrically conductive liquid contained in cavities of the compartment frames adjacent to (end) portions of the gel strips so as to generate an electric field along an extension of the gel strips. Thus, the gel electrophoresis device may be operated for performing "off-gel" analysis, wherein the general concept of "off-gel" electrophoresis is specified in WO 01/86279 A1 and WO 03/019172 A2.

When connecting an electrode member to a gel strip in the gel electrophoresis device being operated in the "off-gel" operation mode, the electric contacts of the electrode member may contact a portion, particularly an end portion, of the gel strip. Electric contacts of another electrode member may contact another portion, particularly another end portion, of the gel strip. Or, a contact of the electrode member may contact the gel strip individually via electrically conductive material contained in a cavity of a compartment frame being in electrical connection with both the electrode contact and the gel strip. Then, an electric signal (for instance a constant electric voltage or a constant electric current, or a voltage or current pattern) may applied to the gel strip independently from electric signals applied to at least a part of electric contacts of at least a part of other gel strips received or receivable in the gel electrophoresis device. Additionally or alternatively, an electric signal (for instance the time-dependence of an electric voltage or an electric current) of the gel strip may be measured independently from electric signals measured at at least a part of contacts of at least a part of other gel strips received or receivable in the gel electrophoresis device.

By separating or decoupling the electrical connection of the different gel strips from one another, frame conditions related to "in-gel" and "off-gel" experiments may be taken into account in an improved or optimized manner. Furthermore, events (for instance progress of an electrophoresis analysis in a particular gel strip indicated by a characteristic preknown electric signal pattern) and problems (for instance absence of any current flow in a particular gel strip, for instance caused by a dehydration of the gel strip or an improper electric connection between electrodes and gel strip) occurring in single strip may be easily detected. The progress of an electrophoresis analysis can be detected by the current profile. For instance, the end of the electrophoresis migration process may be assumed when a predefined amount of Ampere hours has been exceeded in a gel strip. This may be detected by an integrator connected in a control circuit.

For instance, by detecting an electrical signal like an electric current or an electric voltage individually for the different gel strips may allow to detect the numberof gel strips which are presently inserted in the electrode arrangement. Moreover, a short circuit in a gel strip may be detected, for instance when detecting that the electric current flowing in a particular gel strip exceeds a threshold value. Such an event may be indicative of a too large salt concentration in a buffer used for hydrating the gel strip. Thus, the separation of the different contacts of the gel strips from one another may allow for a meaningful diagnosis of errors or events in each of the gel strips individually. It may be detected when a particular gel strip does not work properly.

Furthermore, during the analysis, the electric current may be monitored, so that, if desired, a rehydration of the strip can be automatized in case of detecting a dehydration of the gel strip. Thus, a measured electrical signal can be used as a basis for a control or regulating signal to adjust the value of a current or a voltage applied to one of the gel strips. For instance, the system can also monitor whether an experiment in one of the gel strips is already running or is already finished. In the latter case, the electric current can be switched off. In other words, the separate electrical contacts of each of the gel strips allows to monitor an experiment, and, if desired, a modification of the experimental parameters.

The individual contacts of the first electrode may be connected to a control, regulating or evaluation circuit. Such a circuit may be conventionally wired or may be designed as an integrated circuit manufactured in silicon technology. Such a circuit may be mounted on a printed circuit board (PCB).

According to an exemplary embodiment of the invention, two electrode members may be provided for contacting the gel strips. At least one of the two electrode members may be separated on one side (for instance on the electrical ground side), so that a measurement of the current or the voltage at each of the gel strips is possible. The second electrode member may also be designed with individual contacts, or may be designed as a common electrode (for instance on a high-voltage side).

Thus, according to an embodiment of the invention, electrophoresis with return current measurement may be performed. The return current may be measured individually for each strip. The results of such a measurement may be indicative of measurement conditions, error diagnosis, etc.

In the following, further exemplary embodiments of the electrode arrangement will be described. However, these embodiments also apply for the gel electrophoresis device and for the method of operating a gel electrophoresis device.

The electrode arrangement may comprise a second electrode member which may be adapted to provide an electrical contact with the at least two gel strips individually so that each electrical signal of the at least two gel strips may be controllable and/or monitorable separately. According to this embodiment, both the first and the second electrode members provide in each case a separate connection to each of the gel strips.

Alternatively, the second electrode member may be adapted to provide an electrical contact with at least two gel strips concurrently so that the electrical signals of the at least two gel strips may be controllable and/or monitorable in common. By taking this measure, the electric coupling provided by the second electrode member can be realized with low effort, since only a single electric potential is needed. This potential can be, for instance, the ground potential or a high-voltage potential. However, since the contacts at the first electrode member are provided individually for each of the gel strips, a separate supply with control signals or detection of response signals is still possible.

The electrode arrangement may comprise a first housing in which the first electrode member may be arranged. Furthermore, the electrode arrangement may comprise a second housing in which the second electrode may be arranged. Providing the two electrode members in separate housings may enable a modular and flexibly adjustable electric configuration.

The first electrode member may be adapted to provide an electrical contact with the at least two gel strips by means of contact springs provided individually for at least a part of the at least two gel strips. Contact springs are means for individually contacting the different gel strips and may provide, due to their bias force, a secure electric connection with the gel strips.

The first electrode member may be adapted to provide an electrical contact with at least three gel strips, wherein at least two of the at least three gel strips are combinable to a group of gel strips, wherein the first electrode member is adapted to provide an electrical contact concurrently with the at least two gel strips combined to a group so that the electrical signals of the at least two gel strips combined to a group are controllable and/or monitorable in common.

In other words, it is possible that some of the gel strips are grouped and are controlled in common concerning their electrical signals. However, other gel strips may be contacted individually and independently from these grouped contacts. For instance, one group of gel strips may be related to "in-gel" electrophoresis and may be supplied with a first kind of controlling signals. A second group of gel strips may be configured for "off-gel" electrophoresis and may thus be provided with another sequence or set of control signals.

Furthermore, the first electrode member may be adapted to provide an electrical contact with a number M of gel strips. The electrode arrangement may comprise a switch unit adapted to control a number N of at least two measurement channels, wherein M>N. The switch unit may be adapted to selectively electrically interconnect the M gel strips to the N measurement channels. In other words, a switch unit which may be controlled (automatically or in a user-defined manner) to group gel strips to measurement channels and to electrically connect or disconnect the different gel strips accordingly, so that the N measurement channels can be used flexible and efficiently corresponding to experimental frame conditions. For instance, a set of gel strips adapted for "in-gel" electrophoresis may be integrated to a first group, and a set of gel strips adapted for "off-gel" electrophoresis may be integrated to a second group. Then, a first measurement channel may be connected to control the analysis in the first group, and a second measurement channel may be connected to control the analysis in the second group.

In the following, further exemplary embodiments of the gel electrophoresis device will be described. However, these embodiments also apply for the electrode arrangement, and for the method of operating a gel electrophoresis device.

The gel electrophoresis device may be adapted for fluid separation by means of an applied electric field. In other words, the gel electrophoresis device may comprise one or more gel strips which can be contacted by means of an electrode arrangement. Then, an electric field can be applied to at least a part of the gel strips individually. This generates an electric field along the gel strips and may thus effect a force acting on charged components of an analyt included in the gel or in a compartment frame above the gel. Different charges of different fractions may have the consequence that the different fractions are separated into different bands. Thus, fluid components may be separated by means of an applied electric field.

Furthermore, the gel electrophoresis device may comprise a carrier element having at least two gel strip receptions, wherein each of the at least two gel strip receptions may be adapted to receive a gel strip. The first electrode member may be adapted to provide an electrical contact with at least two gel strips received in the gel strip receptions individually so that each electrical signal of the at least two gel strips is controllable and/or monitorable separately.

Furthermore, the gel electrophoresis device may comprise a second electrode member adapted to provide an electrical contact with the at least two gel strips received in the gel strip receptions individually so that each electrical signal of the at least two gel strips may be controllable and/or monitorable separately.

The first electrode member and/or the second electrode member may be removably attachable to the carrier element. Thus, a modular system may be provided in which any of the electrode members may be attached or detached selectively from the gel electrophoresis device to allow for an access to the interior of the gel electrophoresis device in order to insert gel strips and, optionally, compartment frames. Furthermore, after termination of an experiment or analysis, the construction kit like gel electrophoresis device may be disassembled, and the contaminated gel strips may be removed, and substituted by new gel strips.

Moreover, the first electrode member and/or the second electrode member may be removably attachable to the carrier element by a magnetic attachment element. By taking this measure, it may be dispensable to fix the electrode members by means of an additional cover of the gel electrophoresis device. In contrast to this, fastening or locking means may be provided directly on the first electrode member, and the gel electrophoresis device may comprise a correspondingly designed magnetic counterpart, so that by means of a magnetic force, the first electrode member may be attracted to the gel electrophoresis device to be securely locked with the latter.

The first electrode member and/or the second electrode member may be shiftable along the gel strip receptions. According to this embodiment, the distance between the two electrode members may be selectively adjusted, and it is possible to flexibly adjust the positions of the electrode members to a varying length of the gel stri ps.

Beyond this, the gel electrophoresis device may comprise an electrical control circuit coupled to the first electrode member and/or to the second electrode member for applying an electrical signal to at least a part of the gel strips separately from the remaining gel strips. By taking this measure, the individual contacts to the gel strips may be used to apply different control or drive signals to the strips so as to perform an individual experiment or analysis in each of the different gel strips.

Additionally or alternatively, the gel electrophoresis device may comprise an electrical monitoring circuit coupled to the first electrode member and/or to the second electrode member for monitoring an electrical signal at at least a part of the gel strips separately from the remaining electrically conductive contacts at the gel strips. Again, measured signals of the individually contactable gel strips can be measured by the monitoring circuit. Based on this measurement, it can be determined whether an experiment is running well or with an error, is already finished, might be finished, or yields particular results. This investigation can be performed individually for each of the gel strips so that diagnosis and error removal can be performed for each of the gel strips individually.

The electrical monitoring circuit may be adapted to detect an operation state and/or to control or regulate an operation of the gel electrophoresis device based on one or more electrical signals monitored by the electrical monitoring circuit. Such a detected operation state may be the presence or absence of a gel strip, the progress (experiment running or terminated?) of a gel electrophoresis experiment, a dehydration of one of the gel strips, an electrical conductivity of one of the gel strips exceeding a threshold value, or the like.

Detecting an operation state and/or controlling or regulating an operation of the gel electrophoresis device may include at least one of the group consisting of detecting a dehydration of at least one of the gel strips, rehydrating at least one of the gel strips, detecting a short circuit in at least one of the gel strips, detecting a number of gel strips being present in the gel electrophoresis device, detecting at least one measurement parameter, diagnosing an error in the gel electrophoresis device, adjusting at least one buffer concentration in the gel electrophoresis device, and terminating a measurement in at least one of the gel strips of the gel electrophoresis device.

Furthermore, the gel electrophoresis device may comprise one or more insert element receptions, wherein each of the one or more insert element receptions may be adapted to removably receive an insert element forming the carrier element. Thus, also the carrier element may be realized as a modular component which can be removably attached to or detached from the gel electrophoresis device. Thus, the insert element can be designed as a cheap disposable device which can, for instance, be made of plastics material, and can be manufactured by injection molding. By providing the insert element in a substitutable manner, it is also possible to use insert elements of different types, adjusted to a particular application.

The first electrode member and/or the second electrode member may be removably attachable to the insert element. Thus, when substituting the insert element, the electrodes may be simply clicked on, for instance by means of a magnetic or electric locking mechanism, a mechanical snap-in connection, a loop and hook fastening element, or the like.

In the following, an exemplary embodiment of the method of operating a gel electrophoresis device will be described. However, this embodiment also applies for the electrode arrangement, and for the gel electrophoresis device.

The at least two gel strips may be electrically contacted individually by means of a second electrode member so that each electrical signal of the at least two gel strips may be controllable and/or monitorable separately. Thus, not only the first electrode member may be adapted to contact at least a part of the gel strips individually, but also a corresponding second electrode member may be provided in such a manner.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 is a three-dimensional view of a gel electrophoresis device according to an exemplary embodiment of the invention in a partially disassembled state.

Fig. 2 is a three-dimensional view of the gel electrophoresis device of Fig. 1 with an insert element according to an exemplary embodiment of the invention partially mounted to the gel electrophoresis device.

Fig. 3 is a three-dimensional view of the gel electrophoresis device of Fig. 1 with the insert element of Fig. 2 mounted thereon.

Fig. 4 is a three-dimensional view of the insert element of Fig. 2 in a disassembled state.

Fig. 5 is a three-dimensional view of the insert element of Fig. 4 with gel strips mounted therein.

Fig. 6 is a three-dimensional view of the insert element of Fig. 4 with compartment frames mounted on some of the gel strips.

Fig. 7 is a three-dimensional plan view of the insert element of Fig. 4 with compartment frames mounted in all of the gel strips and with electrode members according to an exemplary embodiment of the invention mounted on the insert element.

Fig. 8 is a three-dimensional view of the insert element of Fig. 4 without compartment frames and with one of the electrode members shifted along the insert element.

Fig. 9 is a three-dimensional view of the insert element of Fig. 4, wherein some components of the electrode members are removed.

Fig. 10 is a detailed view of a portion of the insert element of Fig. 9 and of one of the electrode members of Fig. 9.

Fig. 11 is a detailed view of a portion of the insert element of Fig. 4.

Fig. 12 is a detailed view of a bottom of the insert element of Fig. 4 and of one of the electrode members of Fig. 9.

Fig. 13 is a three-dimensional view of a compartment frame having a plurality of cavities according to an exemplary embodiment of the invention.

Fig. 14 is a three-dimensional view of an electrode member according to an exemplary embodiment of the invention.

Fig. 15 is a three-dimensional view of an electrode member and of a locking element attached thereto according to an exemplary embodiment of the invention.

Fig. 16 is a three-dimensional view of a locking element and of a counterpart according to an exemplary embodiment of the invention.

Fig. 17 is a three-dimensional view of the electrode member of Fig. 12.

The illustration in the drawing is schematically.

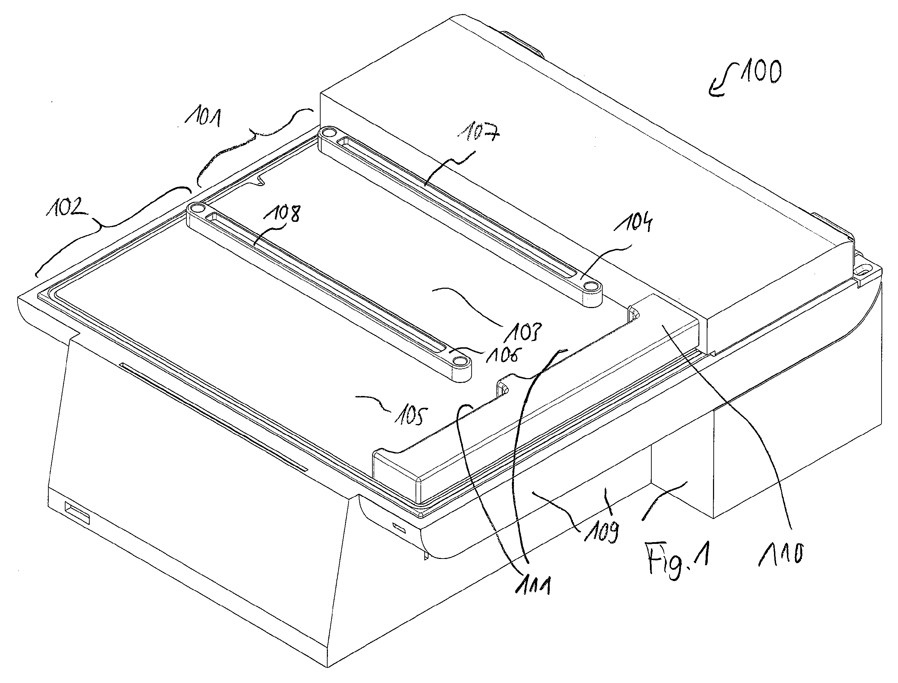

In the following, referring to **Fig. 1,** a gel electrophoresis device 100 according to an exemplary embodiment of the invention will be described.

In Fig .1, the gel electrophoresis device 100 is illustrated without a cover plate or cap which may be put on the top of the gel electrophoresis device 100 to cover the elements 101 to 108, 110, 111. Such a cover may be opened for mounting components of the modular gel electrophoresis device 100 in order to prepare a gel electrophoresis analysis in a user-defined manner. During the actual gel electrophoresis analysis, the cover may be closed in order to avoid undesired influences of the external environment on the gel electrophoresis analysis and to optionally improve a locking or fastening of the modular components received in the interior of the gel electrophoresis device 100.

Particularly, such a cover can be positioned on the top of the device 100 in order to cover a first insert element reception 101 and a second insert element reception 102. The first insert element reception 101 which is adapted to receive an insert element or a tray for performing a user-defined gel electrophoresis analysis comprises a planar platform 103 and a bar-like rail 104. In a similar manner, the second insert element reception 102 comprises a planar platform 105 and a bar-like rail 106.

The platforms 103 and 105 are, independently from each other, temperature-controllable, that is to say heatable or coolable, in order to selectively heat or cool a sample to a selectable temperature. A heating element (not shown) integrated within the platforms 103, 105 may comprise a heating coil or a heating spiral which may be controlled either by the gel electrophoresis device 100 automatically, or in a user-defined manner via a user interface, for instance a graphical user interface. A cooling element (not shown) integrated within the platforms 103, 105 may comprise a Peltier cooling device or a water cooling which may be controlled either by the gel electrophoresis device 100 automatically, or in a user-defined manner via the user interface.

For performing an electrophoresis experiment it might be appropriate to apply electrical signals (for instance an electrical potential) to electrodes which may be removably attached to the gel electrophoresis device 100, as will be described in detail below. For this purpose, a first electrode member may be connected to a strip-like first electrical contact 107 or 108 which is provided at each of the rails 104, 106. Essentially parallel to the strip-like first electrical contact 107, 108, at a bottom side of each of the rails 104, 106, a ferromagnetic strip (not shown in Fig. 1, see Fig. 16) is arranged which may allow to lock the electrode members to the gel electrophoresis device 100, for instance in order to fasten gel strips used for a gel electrophoresis experiment to the gel electrophoresis device 100.

Furthermore, the gel electrophoresis device 100 comprises a casing 109, wherein a plurality of further functional components (for instance electric circuits, etc.) of the gel electrophoresis device 100 which are not shown in Fig. 1 are housed in the interior of the casing 109. Fig. 1 shows a disassembled operation state of the gel electrophoresis device 100 without any insert element mounted on the insert element receptions 101, 102.

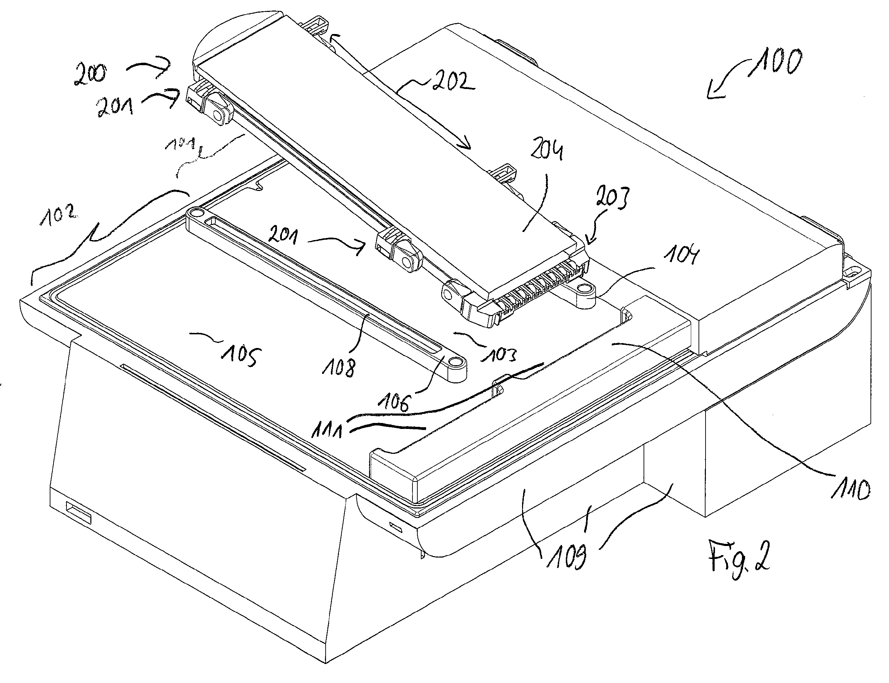

**Fig. 2** shows the gel electrophoresis device 100 in an operation state in which an insert element 200, which may also be denoted as a tray, is inserted in the first insert element reception 101. The insert element receptions 101, 102 are spatially defined by the platforms 103, 105, by the positions and the design of the rails 104, 106, and also by a boundary member 110 which has specially-shaped recesses 111 geometrically adapted to the shape of an end portion of the insert element 200.

As can be seen in Fig. 2, the insert element 200 comprises a first electrode member 201 which is shown twice in Fig. 2 to illustrate that the first electrode member 201 is provided slidably along a sliding direction 202. Furthermore, the insert element 200 comprises a second electrode member 203 which is provided in a fixed manner, that is to say in a manner as to be not slidably. However, in an alternative embodiment, also the second electrode member 203 may be provided slidably along the sliding direction 202. The construction and the function of the electrode members 201, 203 will be described in more detail below.

Furthermore, the insert element 200 comprises a cover plate 204 which can be mounted on the top of the modularly designed insert element 200 after having inserted a plurality of elements in the interior of the insert element 200. Such a cover 204 may have the function of fastening and protecting the elements located in the interior of the insert element 200.

As can be seen in Fig. 2, the already preconfigured and premounted insert element 200 can be inserted as a whole in one of the insert element receptions 101, 102. Alternatively, only a carrier element of the insert element 200 may be inserted in a desired one of the insert element receptions 101, 102, and the experimental components can then be mounted in such a carrier element in an operation state of the carrier element in which it is received in one of the insert element receptions 101, 102. Although two insert element receptions 101, 102 are shown in Fig. 2, it is possible to use more or less insert elements 200 and insert element reception 101, 102 , and to insert one or at least three insert elements 200 in the insert element receptions 101, 102.

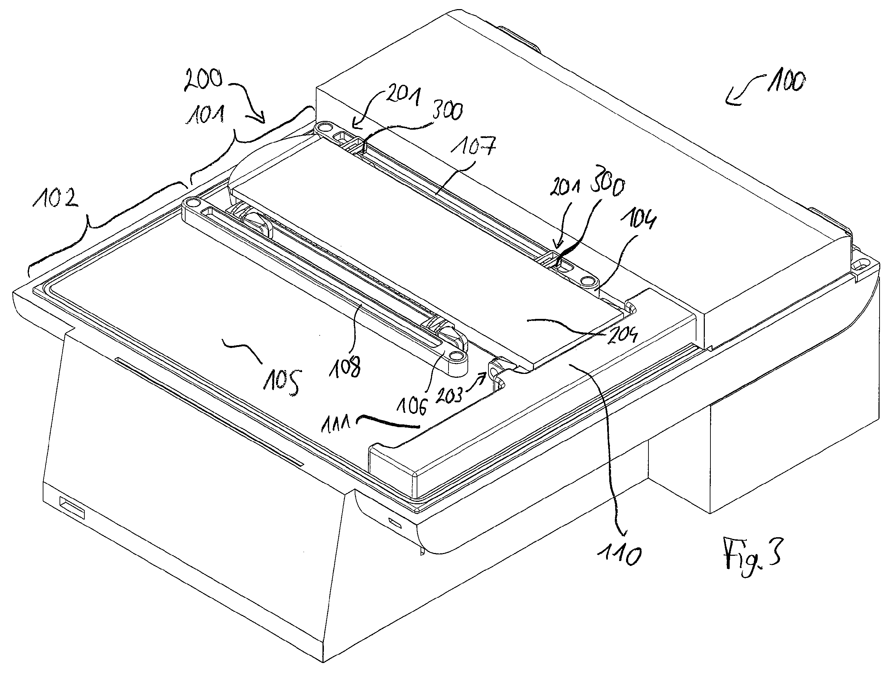

**Fig. 3** shows the gel electrophoresis device 100 in a further operation state in which the insert element 200 is readily and completely inserted in the insert element reception 101.

In this operation state, the first electrode member 201 which is, also in Fig. 3, shown twice, has a contact element 300 which is mechanically and electrically coupled to the strip-like first electrical contact of the rail 104. As will be described in more detail below, apart from this electrical contact between the components 300, 107, a magnetic locking mechanism is provided by the interaction between a permanent magnet provided at a lateral position of the first electrode 201 in vicinity of the contact element 300 and a strip made of a magnetic material which is provided at a bottom side of the rail 104 and extending parallel to the electrical contact 107 of the rail 104.

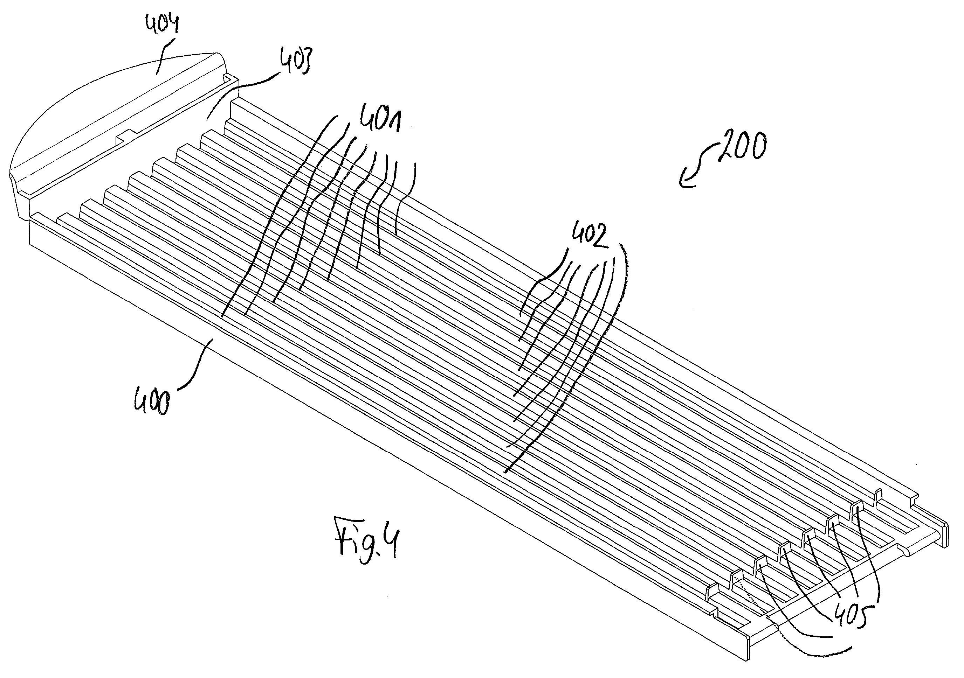

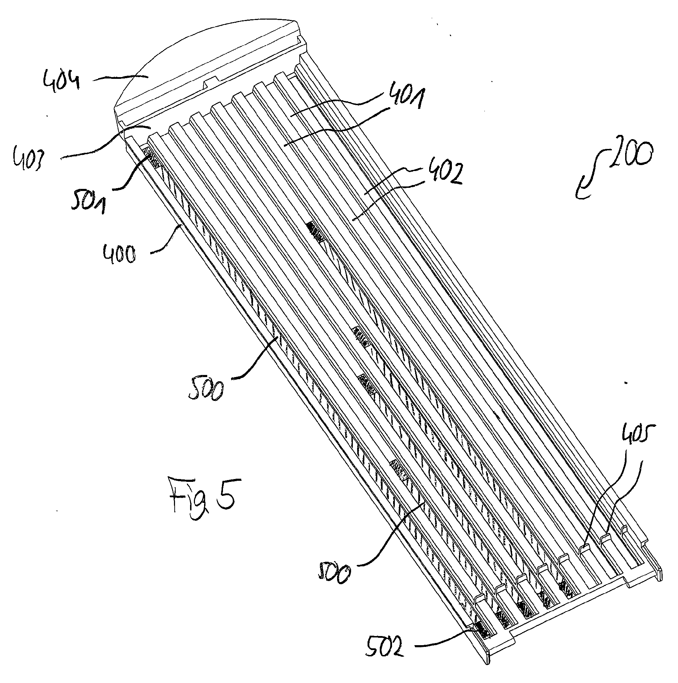

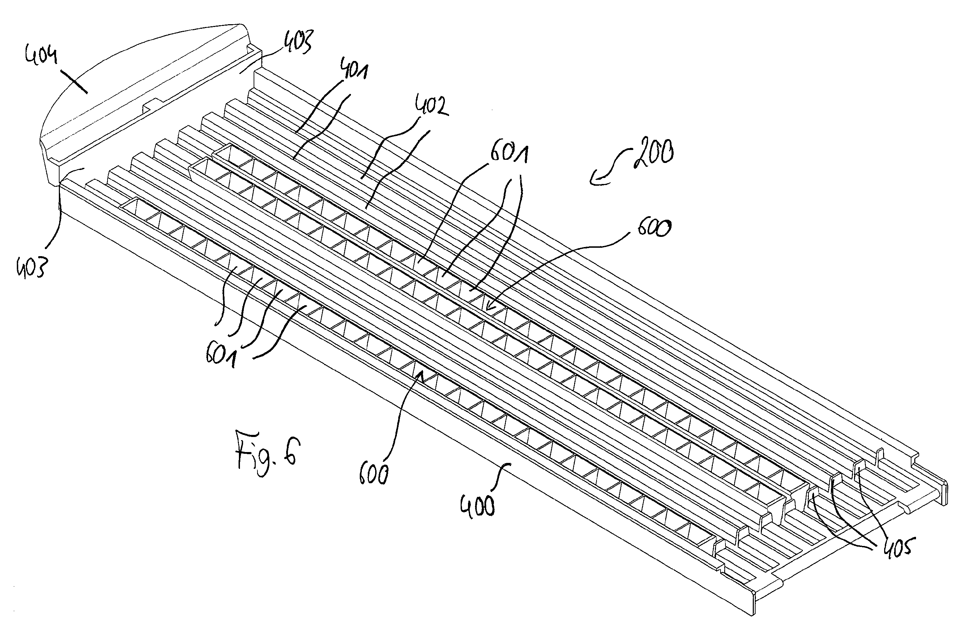

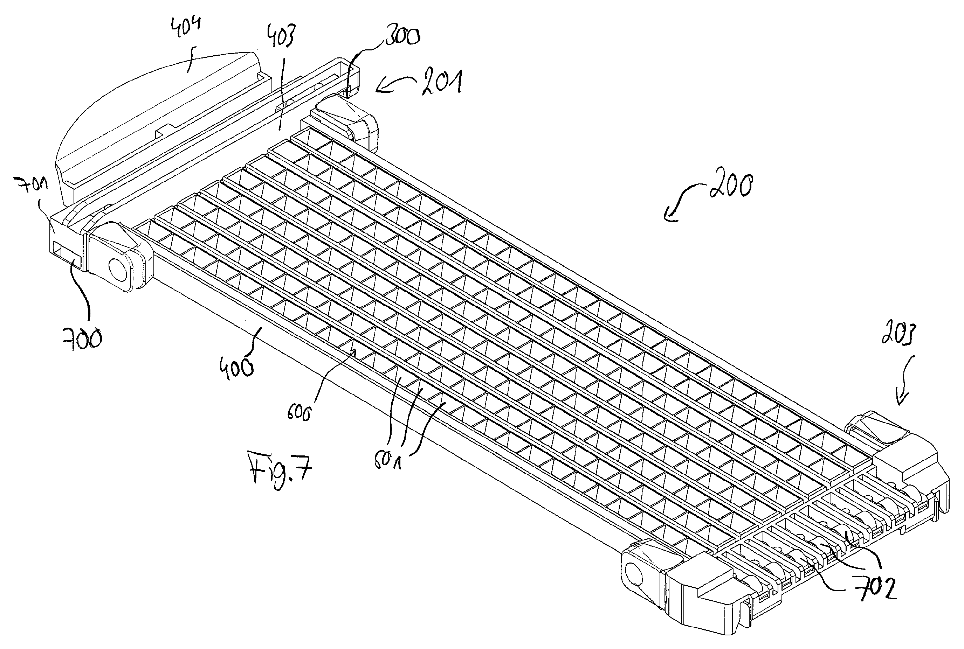

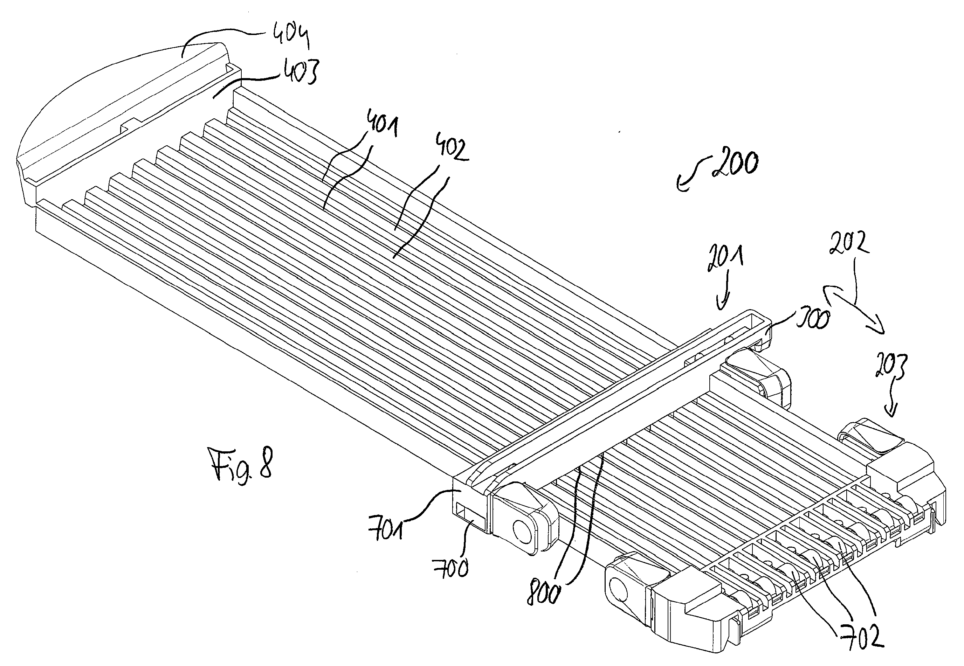

In the following, referring to Fig. 4, the insert element 200 shown in Fig. 2 is shown in a disassembled state without cover 204 and will be described in detail in the following.

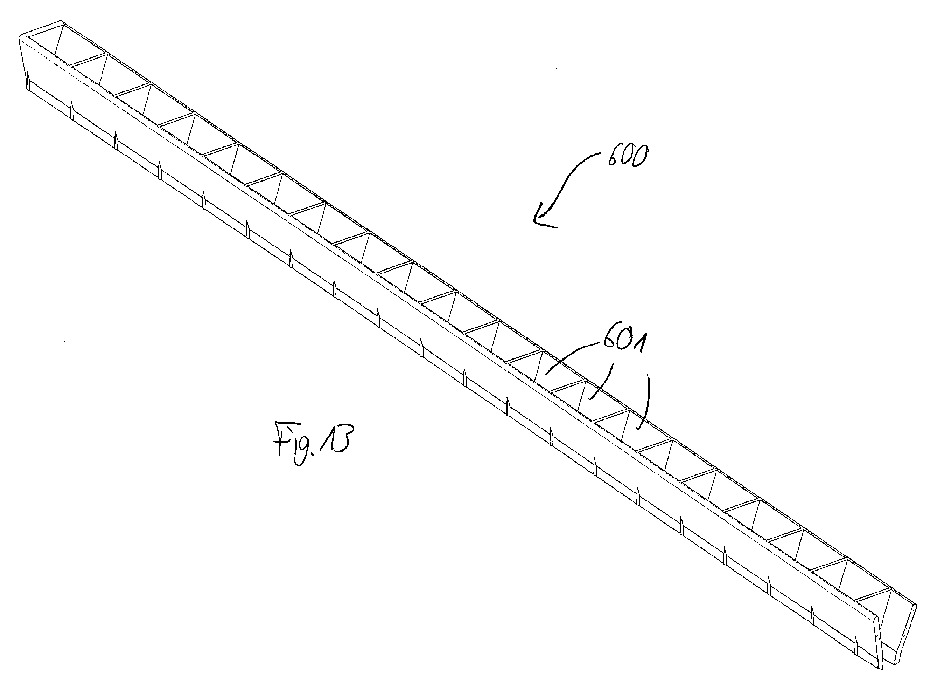

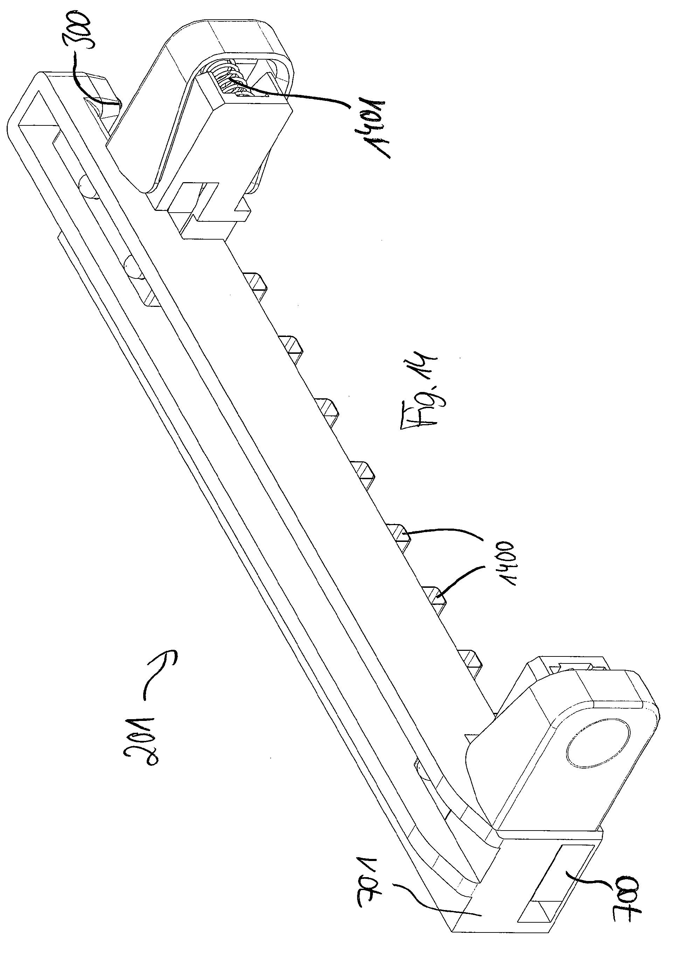

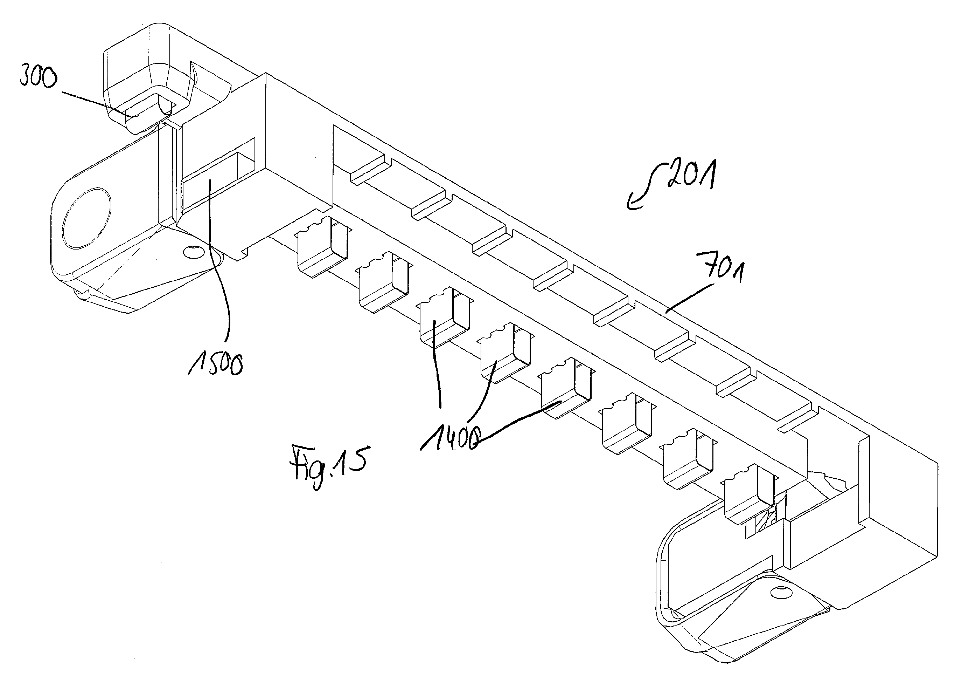

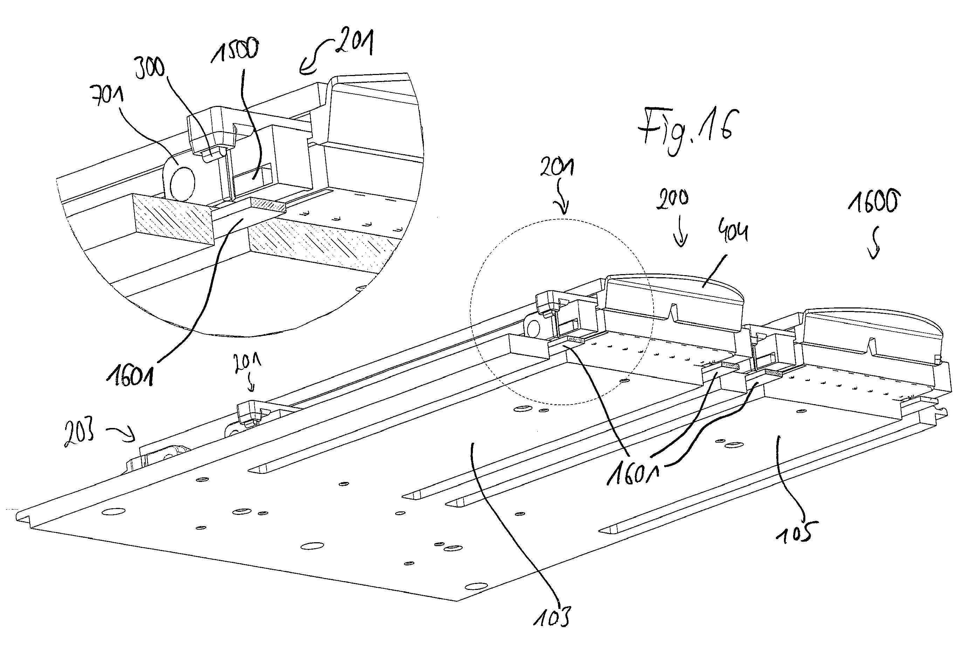

The insert element 200 for the gel electrophoresis device 100 comprises a carrier element 400 comprising a plurality of channel-like gel strip receptions 401. Each of the gel strip receptions 401 is adapted to receive a strip-like gel strip therein. Furthermore, each of the gel strip receptions 401 is further adapted to receive a compartment frame (see Fig. 6) in such a manner that the corresponding compartment frame is located closely, in the embodiment of Fig. 4 above, the corresponding gel strip. Any of the gel strip receptions 401 is adapted to removably and substitutably receive a corresponding gel strip, so that a gel strip may be inserted in each of the gel strip receptions 401 in accordance with requirements of a particular experiment or analysis. It is possible to remove a gel strip after use and replace it by a new gel strip for a subsequent experiment or analysis. Beyond this, each of the gel strip receptions 401 may removably receive a compartment frame to be located above the gel strip.

Each of the gel strip receptions 401 is designed as an essentially rectangular groove for receiving an oblong band-like or bar-like gel strip. Above this groove, rib-like or tapered sidewalls 402 are provided to receive compartment frames in a manner as to contact the gel strip below. The compartment frames may be fastened by press-fit between two adjacent ribs 402.

At a first end portion of the insert element 200, an essentially vertical border wall 403 is provided which may abut to an end portion of compartment frames or gel strips inserted above or in the gel strip receptions 401. Close to the wall 403, a grip 404 is provided to allow a user to hold and operate the insert element 200 in a convenient manner. At a second end portion of the insert element 200, individual vertical wall elements 405 are provided opposing the vertical wall 403 so that inserting the compartment frames can be mechanically supported by means of the vertical border elements 405 which may receive a compartment frame in a snap-fit manner.

The insert element 200 may be integrally formed and may be manufactured, for instance, as an injection molded element. According to the described embodiment, the insert element 200 may be made of a plastics material.

The insert element 200 has a thin-walled bottom, that is to say a thin-wall base within the grooves forming the gel strip receptions 401. Optionally, a material for supporting or promoting a thermal contact between the heating/cooling elements provided in the platforms 103, 105 on the one hand and gel strips inserted in the gel strip receptions 401 on the other hand may be provided at the base within the grooves forming the gel strip receptions 401. For example, a metallic material, mineral fibers or a ceramics may be embedded in this bottom, or the bottom may be manufactured of one of these materials.

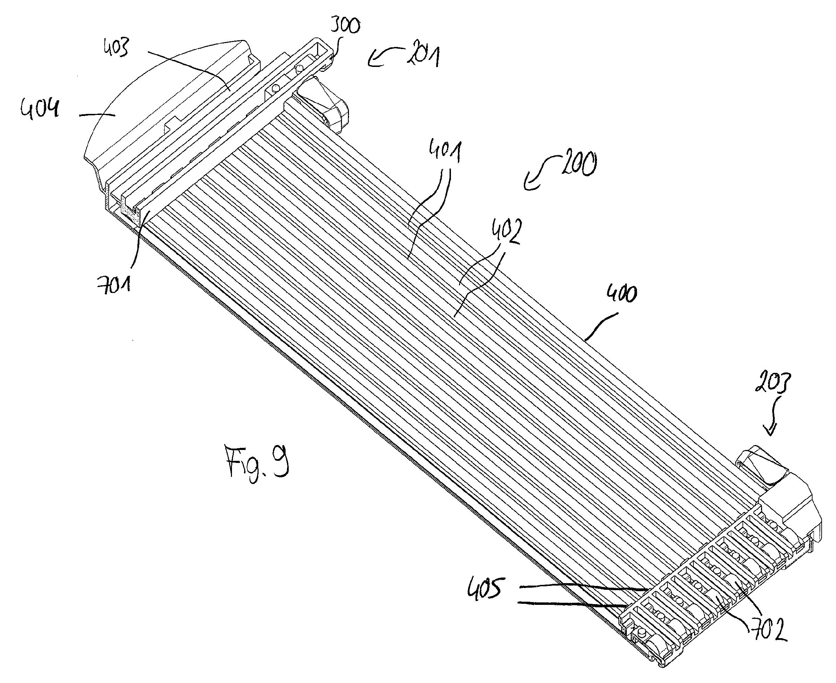

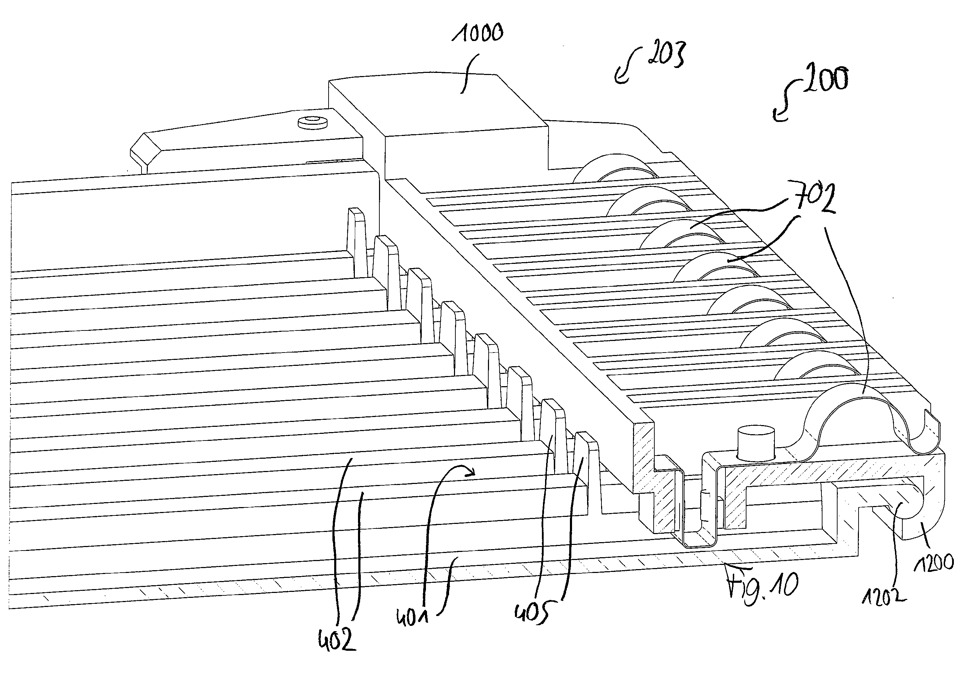

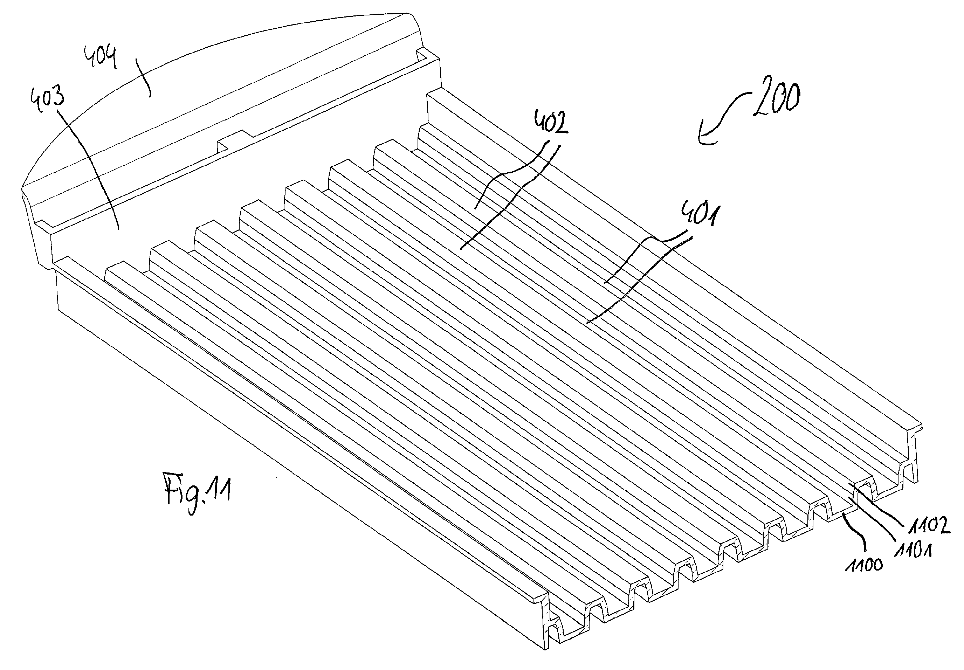

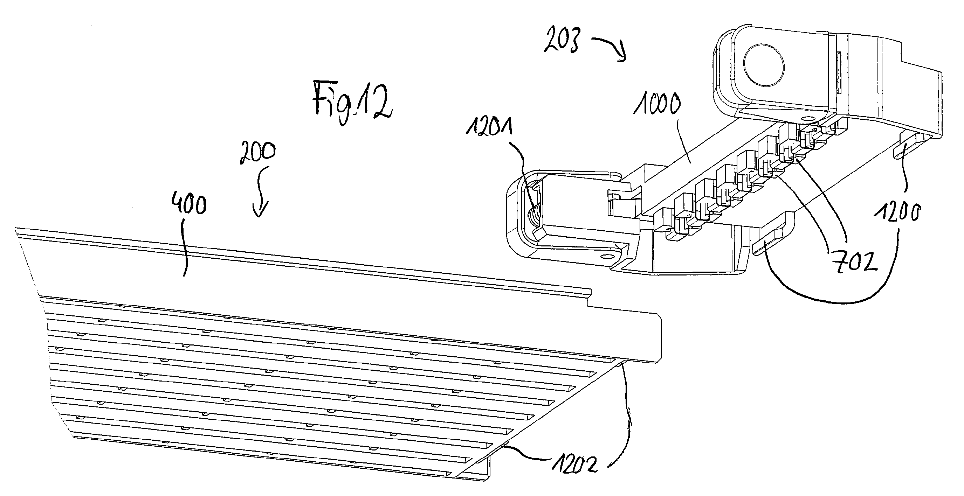

**Fig. 5** shows the insert element 200 in an operation state in which a plurality of gel strips 500 have been inserted in some of the gel strip receptions 401. However, some of the gel strip receptions 401 may remain free of gel strips 500.

As can further be seen, each of the gel strips 500 comprises a first contact 501 at a first end portion thereof, and comprises a second contact 502 at a second end portion of the corresponding gel strip 500. These contacts 501, 502 may be contacted by electrode members 201, 203, respectively, in order to apply an electric field along the extension of the respective gel strip 500. A central (major) part of the gel strips 500 between the contacts 501, 502 is formed by gel material, wherein a pH gradient may be generated along the extension direction of the gel strip 500 in order to allow a separation of components of an analyt by means of isoelectric focussing. Furthermore, before using the gel strips, the gel strips may be hydrated, after being inserted in the gel strip receptions 401 or before being inserted in the gel strip receptions 401, for instance in a biolab. The gel material may be provided on a strip-like plastics substrate of the gel strip 500.

As can be seen in Fig. 5, gel strips 500 of different lengths may be inserted in the gel strip receptions 401 in accordance with the modular character of the electrophoresis system according to an embodiment of the invention.

When an analyt is inserted in the gel strips 500, for instance by injecting the analyt by means of a pipette or the like, different fractions of molecules (for instance proteins) of the analyt having different charge properties are moved with different velocities along the gel strips 500 until they are stopped at a particular position of the gel strip 500, which is defined by the local pH gradient at this position and the charge of the corresponding molecules. Thus, different substances may be separated to form individual bands along the extension of the gel strips 500.

Thus, Fig. 5 shows a configuration of the insert element 200 for a so-called "in-gel electrophoresis experiment", that is to say a gel electrophoresis experiment in which different fractions of substances of an analyt inserted in the gel strip 500 are separated so that different bands of fractions are stopped at different positions within the gel strips 500. For recovering the separated components, the corresponding gel strip 500 may be cut, or the respective fractions may be dissolved from the gel strip 500, for instance by means of a pipette.

In the following, referring to **Fig. 6,** an alternative operation state or configuration state of the insert element 200 will be described so that the insert element 200 in the configuration of Fig. 6 can be used for so-called "off-gel electrophoresis" in accordance with the general concept disclosed, for instance, in WO 01/86279 A1 and WO 03/019172 A2.

In the configuration shown in Fig. 6, a plurality of compartment frames 600 are inserted in some of the receptions defined as portions between adjacent ribs 402. Before inserting the compartment frames 600 into the corresponding grooves, the grooves are equipped with gel strips (not shown in Fig. 6) inserted in the corresponding gel strip receptions 401.

The compartment frames 601 may then be positioned above the gel strips 500. Each of the compartment frames 600 comprises a plurality of cavities 601 each of which may be filled individually with analyt, buffer, electrolyte, or any other solution. The cavities 601 may be arranged in a one-dimensional manner, that is to say in a row-like manner. The cavities 601 may be filled, for instance, by means of a pipette. Within a cavity 601, there may be a direct functional connection between fluid inserted in the cavity 601 and the adjacent gel part of the gel strip 500 below the respective cavity 601. Thus, the compartment frames 600 are adapted for providing an analyt filled compartment fluid coupled to the gel strip 500.

In the following, a principle of an "off-gel electrophoresis" experiment will be described which may be performed with the configuration of Fig. 6.

For this purpose, gel strips 500 may be used.

First, a gel strip 500 is hydrated and is inserted in one of the gel strip receptions 401. Then, a corresponding compartment frame 600 is positioned above the respective gel strip 500 received in the gel strip reception 401 and abuts laterally against sidewalls of the ribs 402. One or both end portions of the compartment frames 600 may also be fixed by means of the vertical wall elements 403, 405. At an open bottom part of the compartment frame 600, it abuts against an upper side of the gel strip 500 so as to enable fluid communication between the gel and fluid contained in the cavities 601 of the compartment frame 600.

Electrode members 201, 203 may be electrically connected to contacts 501, 502 of the gel strip 500. Alternatively, electrical contacts of the electrode members 201, 203 may be directly "dipped" in cavities 601 of the compartment frames 600 so as to apply an electric field along an extension of the gel strip 500.

An analyt may be filled in one or more of the cavities 601, for instance in one of the cavities located at one of the end portions of the compartment frames 600. The analyt may then flow (for instance promoted by effects like diffusion) into the gel strip 500 below the respective cavity 601. As a consequence of an applied electric field, charged substances of the analyt may then be moved along an extension of the gel strip 500. Due to the isoelectric focusing occurring in accordance with the pH gradient provided along the gel strip 500, each fraction of substances stops at a particular position of the gel strip 500. The fraction or component may then flow (for instance promoted by effects like diffusion) from the particular position within the gel strip 500 back to the respective cavity 601 above this position. This cavity 601 may be filled with a buffer solution, so that the corresponding fraction is accumulated in a particular one of the cavities 601 and can be recovered by receiving the substance comprising buffer in the cavity 601, for instance by means of a pipette.

Coming back to Fig. 1, the gel electrophoresis device 100 having the insert element receptions 101, 102 is adapted so that the insert element 200 may be inserted in a corresponding one of the insert element receptions. Then, also with assistance of the electrical contacts 107, 108, which may be brought in contact with electrical contacts of the electrode members 201, 203, an electric field may be applied along an extension of the gel strips 500 by means of an applied electric field due to the electrical contacting of the gel strips 500.

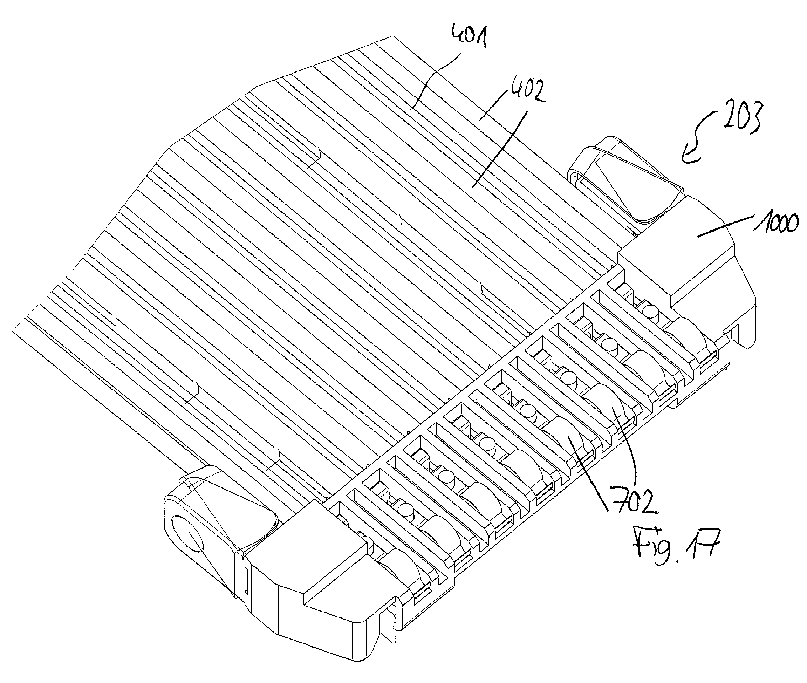

Referring to Fig. 7, the insert element 200 will be described in a configuration which differs from the configuration of the insert element 200 shown in Fig. 6 in that all gel strip receptions 401 have received a particular one of the compartment frames 600.

Thus, in the configuration of Fig. 7, in each measurement channel 401, an off-gel electrophoresis analysis may be performed. In contrast to this, according to Fig. 6, the measurement channels 401 filled with compartment frames 601 are adapted to perform an off-gel electrophoresis analysis. The remaining measurement channels 401 in which only a gel strip 500, but not a compartment frame 600 is inserted, are adapted to perform an in-gel electrophoresis experiment. Thus, the modular system according to embodiments of the invention may be capable to be flexibly adjusted for a configuration desired by a user, so that the user may perform and combine in-gel and off-gel experiments according to her or his preferences.

In other words, the gel electrophoresis device 100 is adapted to selectively perform a separation of an analyt within the gel strips 500 and/or to perform a separation of an analyt so that the separation products are provided in a solution contained in different cavities 601 of compartment frames 600.

As can be seen in the configuration of Fig. 7, the first electrode member 201 is attached to the insert element 200 to be received in an insert element reception 101 or 102, wherein the first electrode member 201 has electrically contacts which are not shown in Fig. 7 to contact the gel strips 500 received in the gel strip receptions 401.

The second electrode member 203 is attached to the insert element 200 to be received in an insert element 101, 102 to contact the gel strip 500 received in the gel strip reception 401.

Alternatively, it is possible that the first electrode member 201 is attached to the insert element 200 to be received in one of the insert element receptions 101, 102, and that the electrode member 201 directly dips into one of the cavities 601 of the compartment frames 600. According to this configuration, also the second electrode member 203 attached to the insert element 200 to be received in one of the insert element receptions 101, 102 may be directly dipped in a cavity 601 of a compartment frame 600.

According to the embodiment of Fig. 7, the electrode members 201, 203 are clicked onto the top of the insert element 200 loaded with gel strips 500 and compartment frames 600. Thus, the attachment of the electrodes 201, 203 is releasably. Consequently, after use, the compartment frames 600 and/or the gel strips 500 may be removed for cleaning and/or may be substituted by others, and then the electrodes 201, 203 may be clicked again on the insert element 200.

Particularly, the removable attachment of the first electrode member 201 and of the second electrode member 203 to the insert element 200 or to the gel electrophoresis device 100 may be performed by means of a magnetic attachment element. Although this will be described below in more detail, Fig. 7 shows that a permanent magnet 700 is attached at a lateral end portion of a housing 701 of the first electrode member 201.

Referring again to Fig. 2, when the insert element 200 is inserted in the insert element reception 101, the permanent magnet 700 is located close or adjacent to the rail 106. When a ferromagnetic strip is provided at a bottom part of the rail 106, an attracting magnetic force between the permanent magnet 700 and this ferromagnetic strip may be effected so that a secure magnetic locking of the electrode member 201 to the gel electrophoresis device 100 can be realized by means of the magnetic locking element 700 and the corresponding magnet counterpart within the rail 106. In a similar manner, a permanent magnet can also be provided at a lateral part of the housing 701 of the first electrode member 201 adjacent to the electrical contact 300.

As will be described below in more detail, the first electrode member 201 is adapted to concurrently electrically contact each of the gel strips 401 in common. In other words, a common electrical contact between the electrode member 201 and all gel strips below the compartment frames 600 may be effected, wherein this contact can be provided by means of the electrical contact 300 which may be brought in contact to the first electrical contact 107 of the rail 104. Thus, when the first electrode member 201 is slid or shifted along an extension of the gel strips 401, as shown in Fig. 8, a sliding contact is provided between the contact 300 and the strip-like contact 107.

The second electrode member 203 may or may not be adapted to electrically contact each of the gel strips 401 individually. As indicated in Fig. 7, an individual contact to each of the gel strips 401 can be realized by means of individual contact spring elements 702. In other words, the second electrode 203 may be adapted to electrically contact the gel strips 401 individually.

**Fig. 8** additionally shows contacts 801 of the first electrode member 201 which contact the various gel strips 500 received in the gel strip receptions 401. However, the contacts 801 are electrically connected to be brought to the same electrical potential, via a connection with the common contact 300.

**Fig. 9** shows a partially sectional view of the insert element 200 illustrating the geometrical configuration of the different components.

In the following, referring to **Fig. 10**, details of the electrode arrangement in the insert element 200 will be described in the context of a more detailed description of the second electrode member 203.

The second electrode member 203 is adapted to provide an electrical contact with a plurality of gel strips 500 located in the gel strip receptions 401 individually so that each electrical signal of the gel strips 500 is controllable and/or monitorable separately.

As can be seen in Fig. 10, the second electrode member 203 comprises a second housing 1000 in which the individual electrical contact springs 702 are arranged and are electrically decoupled from one another. Each of the contacts 702 may be connected separately to a circuitry (not shown) in the interior of the gel electrophoresis device 100 for providing control signals and for processing measurement signals detected by the individual contacts 702.

Such a circuit may be provided as an integrated circuit (IC) which may be manufactured in silicon technology or may be conventionally wired. Such a circuit may be mounted on a printed circuit board (PCB).

Although not shown in Fig. 10, the second electrode member 203 may be adapted to provide an electrical contact with at least three gel strips 500 received in gel strip receptions 401, wherein at least two of the at least three gel strips 500 may be combined to a group of gel strips 500. The second electrode member 203 may then be further adapted to provide an electrical contact concurrently with the gel strips 500 combined to a group so that the electrical signals of the gel strips 500 combined to a group are controllable and/or monitorable in common.

In other words, the individual contact functionality of the second electrode member 203 can be further refined in a manner to allow a separate contact of different gel strips 500, however, further allowing to couple different of the contact springs 702 to a group and to control or read out the gel strips 500 within this group in common but separate from gel strips 500 which are not included in this group. It is also possible to provide a switch unit (not shown) within the gel electrophoresis device 100 which flexibly switches or interconnects a plurality of the contacts 702 together, in order to realize a measurement environment in accordance with a user definition.

In the embodiments shown in Fig. 1 to Fig. 10, an electrical control circuit (not shown) can be provided in the gel electrophoresis device 100 and may be coupled to the second electrode member 203 for applying an electrical signal to the gel strips 500 received in the gel strip receptions 401 separately from other gel strips 500 received in other gel strip receptions 401 of the insert element 200.

Furthermore, an electrical monitoring circuit (not shown) may be provided in the gel electrophoresis device 100 and may be coupled to the second electrode member 203 for monitoring an electrical signal of the gel strips 500 received in the gel strip receptions 401 separately from the remaining gel strips 500 received in other gel strip receptions 401.

By means of the electrical monitoring circuit, an operation state of the gel electrophoresis device 100 may be monitored, or an operation state of the gel electrophoresis device 100 may be controlled or regulated based on electrical signals monitored by the electrical monitoring circuit.

For instance, this may include detecting a dehydration (that is to say a loss of humidity) of at least one of the gel strips 500 received in the gel strip receptions 401, rehydrating (that is to say to deliver fluid to) at least one of the gel strips 500 received in one of the gel strip receptions 401, detecting a short circuit in the gel strips 500 received in the gel strip receptions 401 (for instance by detecting that an electric current in the gel strip 500 has exceeded a threshold value), detecting a number of gel strips 500 received in the gel strip receptions 401 being present in the gel electrophoresis device 100 (for instance by detecting the number of gel strips 500 in which an electric current is flowing), detecting at least one measurement parameter (for instance an electrical current, an electrical voltage or an electrical field as a basis for regulating the experimental conditions), diagnosing an error in the gel electrophoresis device 100 (for instance by detecting that an electric current in the gel strip 500 has fallen below a threshold value), adjusting at least one buffer concentration in the gel electrophoresis device (for instance in case that it is detected that the current flowing through one of the gel strips 500 is too high as a consequence of a too high salt concentration in a buffer), or terminating a measurement in the gel strips 500 of the gel electrophoresis device 100 (for instance based on a current or voltage pattern of one of the gel strips 500 which indicates that the electrophoresis process in the gel strip is already finished).

In the following, referring to **Fig. 11,** a detailed view and a cross section through a part of the insert element 200 is explained.

Fig. 11 shows in more detail the geometric configuration of the gel strip receptions 401 and of the ribs 402. A bottom portion of each of the gel strip receptions 401 comprises a thin-walled bottom plate 1100. Adjacent to the horizontal bottom plate 1100, essentially vertical wall portions 1101 are provided which define, together with the bottom plate 1100, a portion for receiving the gel strips 500. Above the vertical wall portions 1101, an outwardly tapered slant wall part 1102 is provided which supports the reception of the compartment frame 600.

**Fig. 12** shows again a detailed view of the second electrode 203 detached from the insert element 200 which is shown from a bottom side in Fig. 12.

As can be seen in Fig. 12, springs 1201 are provided in lateral portions of the essentially U-shaped second electrode member 203 to be engaged and fastened to lateral portions of the carrier element 400, that is to say to its side walls.

Further, hook-like elements 1200 are provided at a bottom portion of the second electrode member 203 to be engaged by correspondingly shaped fastening elements 1202 provided at a bottom part of the insert element 200.

**Fig. 13** shows a detailed view of a compartment frame 600 comprising the plurality of cavity 601.

As can be seen on the right hand side of Fig. 13, the cavities 601 are open at a bottom side to allow a direct fluid contact between a gel strip 500 provided below the compartment frame 600 and fluid filled in one of the cavities 601. Furthermore, the side walls of the cavity 601 are tapered inwardly, so as to be engageable with the correspondingly shaped gel strip receptions 401 of the insert element 200, as can be seen in Fig. 11.

In the following, referring to **Fig. 14,** the configuration of the first electrode member 201 will be described in more detail.

As already mentioned above, the first electrode member 201 is provided in a housing 701 and has, at a lateral position thereof, a permanent magnet 700 as a magnet locking element for locking the first electrode member 201 to a ferromagnetic stripe provided at a bottom part of one of the rails 104, 106 of the gel electrophoresis device 100.

At a lateral portion of the housing 701, an electrical contact 301 is provided which may be connected to the electrical contact 107 on the rail 104 or to the electrical contact 108 on the rail 106. The first electrode 201 can be clicked on the insert element 200 or tray which can be supported by means of a fastening spring-fit 1401 which may be provided at one or both lateral portions of the first electrode member 201.

When, in this configuration, the first electrode member 201 attached to the insert element 200 is attached to the gel electrophoresis device 100, a magnetic locking between the magnetic element 700 and the ferromagnetic strip can be induced.

As can further be taken from Fig. 14, the first electrode member 201 is adapted to provide an electrical contact with all gel strips 500 concurrently so that the electrical signals of the gel strips 500 are controllable and/or monitorable in common. For this purpose, contacts 1400 are provided at a bottom side of the first electrode member 201 which contacts 1400 are electrically connected with each other and with the contact 300 to be contactable to the strip-like contact 107 or 108 of the rail 104 or of the rail 106. For instance, the contacts 1400, 300, 107 may supply a high voltage signal to the gel strips 500 received in the gel strip receptions 401.

**Fig. 15** shows a view of the first electrode member 201 so that the common electrical contact 300 can be seen in more detail. Further, it can be seen in Fig. 15 that a lateral position of the first electrode member 201 has attached thereto a permanent magnet 1500 as a magnetic locking element to generate a magnetic locking force together with a ferromagnetic strip provided in the inside of the rail 104 in an operation state in which the first electrode member 201 is attached to the gel electrophoresis device 100.

In the following, referring to **Fig. 16**, a bottom view of a portion of the gel electrophoresis device 100 and of a part of the insert element 200 will be described.

Fig. 16 shows the bottom views of the first platform 103 and of the second platform 105. On the top of the first platform 103, the insert element 200 is inserted. On the top of the platform 105 and thus in the second insert element reception 102, a further insert element 1600 is inserted.

In Fig. 16, the rails 104, 106 are not shown. However, it is shown that at a bottom part of the rails 104, 106, ferromagnetic strips 1601 are provided which extend along an extension direction of the gel strips 500 and which serve as a magnetic counterpart to the permanent magnet 1500 provided at a lateral portion of the first electrode 201 to allow to magnetically lock the electrode 201 to the gel electrophoresis device 100.

In other words, the permanent magnet 1500 and the ferromagnetic strips 1601 form a magnetic locking system comprising the magnetic locking element 1500 connected to the first electrode member 201 to contact the gel strips 500 received in gel strip receptions 401 of the insert element 200, 1600. The ferromagnetic strip 1601 serves as a magnetic counterpart connected to the gel electrophoresis device 100. Thus, the magnetic locking element 1500 is adapted to lock the first electrode member 201 to the gel electrophoresis device 100 by means of the magnetic counterpart 1601.

In other words, the configuration of Fig. 16 illustrates an electrode arrangement for a gel electrophoresis device 100, wherein the first electrode member 201 of the electrode arrangement provides an electrical contact, via the contact 300, with a plurality of gel strips 500. The first electrode member 201 comprises the permanent magnet 1500 as a first locking element to lock the first electrode member 201 to the gel electrophoresis device 100.

The first locking element 1500 is realized as a magnetic locking element, but may alternatively be realized as one of an electric locking element (for instance a ferroelectric material or an electrically conductive material to which an electrical voltage is applied), a vacuum locking element, a mechanical locking element, a snap-in locking element, and a hook and loop fastening locking element. The permanent magnet 1500 locks the first electrode member 201 to the temperature-controllable carrier element 103 of the gel electrophoresis device. It is recalled that the platform 103 may be provided with cooling and/or heating elements, like a heating coil or a Peltier cooling device.

As can be seen in Fig. 16, the permanent magnet 1500 and, see Fig. 7, also the permanent magnet 700, are arranged at lateral portions of the housing 701 of the first electrode member 201. Furthermore, the first electrode member 201 comprises the electrical contact 300 for supplying an electric signal to the first electrode member 201, wherein the electric contact 300 is also provided at a lateral position of the first housing 701.

As can be seen in Fig. 16, the magnetic field generating strip 1601 is provided essentially parallel to the gel strip 500 so that the first electrode member 201 is shiftable along the magnetic field generating strip 1601.

**Fig. 17** shows another view of a second electrode member 203.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. An electrode arrangement for a gel electrophoresis device (100), the electrode arrangement comprising
a first electrode member (203) adapted to provide an electrical contact with at least two gel strips (500) individually so that each electrical signal of the at least two gel strips (500) is controllable and/or monitorable separately.

2. The electrode arrangement of claim 1, comprising at least one of the following features:
the electrode arrangement comprises a second electrode member (201) adapted to provide an electrical contact with the at least two gel strips (500) individually so that each electrical signal of the at least two gel strips (500) is controllable and/or monitorable separately;
the electrode arrangement comprises a second electrode member (201) adapted to provide an electrical contact with at least two gel strips (500) concurrently so that the electrical signals of the at least two gel strips (500) are controllable and/or monitorable in common;
the electrode arrangement comprises a first housing (1000) in which the first electrode member (203) is arranged;
the first electrode member (203) is adapted to provide an electrical contact with the at least two gel strips (500) by means of contact springs (702) provided individually for at least a part of the at least two gel strips (500);
the first electrode member (203) is adapted to provide an electrical contact with at least three gel strips (500), wherein at least two of the at least three gel strips (500) are combinable to a group of gel strips (500), wherein the first electrode member (203) is adapted to provide an electrical contact concurrently with the at least two gel strips (500) combined to a group so that the electrical signals of the at least two gel strips (500) combined to a group are controllable and/or monitorable in common;
the first electrode member (203) is adapted to provide an electrical contact with a number M of gel strips (500), the electrode arrangement comprises a switch unit adapted to control a number N of at least two measurement channels, wherein M>N, wherein the switch unit is adapted to selectively electrically interconnect the M gel strips (500) to groups and to connect each of the groups to an assigned one of the N measurement channels.

3. The electrode arrangement of claim 2,
comprising a second housing (701) in which the second electrode member (201) is arranged.

4. A gel electrophoresis device (100), comprising
an electrode arrangement of claim 1 or any one of the above claims.

5. The gel electrophoresis device (100) of claim 4,
wherein the gel electrophoresis device (100) is adapted for fluid separation by means of an applied electric field.

6. The gel electrophoresis device (100) of claim 4 or any one of the above claims,
comprising a carrier element having at least two gel strip receptions (401), wherein each of the at least two gel strip receptions (401) is adapted to receive a gel strip (500);
wherein the first electrode member (203) is adapted to provide an electrical contact with at least two gel strips (500) received in the gel strip receptions (401) individually so that each electrical signal of the at least two gel strips (500) is controllable and/or monitorable separately.

7. The gel electrophoresis device (100) of claim 6, comprising at least one of the following features:
the gel electrophoresis device (100) comprises a second electrode member (201) adapted to provide an electrical contact with the at least two gel strips (500) received in the gel strip receptions (401) individually so that each electrical signal of the at least two gel strips (500) is controllable and/or monitorable separately;
the gel electrophoresis device (100) comprises a second electrode member (201) adapted to provide an electrical contact with at least two gel strips (500) received in the gel strip receptions (401) concurrently so that the electrical signals of the at least two gel strips (500) are controllable and/or monitorable in common.

8. The gel electrophoresis device (100) of claim 7, comprising at least one of the following features:
the first electrode member (203) and/or the second electrode member (201) is or are removably attachable to the carrier element.
the first electrode member (203) and/or the second electrode member (201) is or are attachable to the carrier element by a magnetic attachment element (700, 1500);
the first electrode member (203) and/or the second electrode member (201) is or are shiftable along the gel strip receptions (401);
the gel electrophoresis device (100) comprises an electrical control circuit coupled to the first electrode member (203) and/or to the second electrode member (201) for applying an electrical signal to at least a part of the gel strips (500) separately from the remaining gel strips (500);
the gel electrophoresis device (100) comprises an electrical monitoring circuit coupled to the first electrode member (203) and/or to the second electrode member (201) for monitoring an electrical signal at at least a part of the gel strips (500) separately from the remaining gel strips (500);
the gel electrophoresis device (100) comprises an electrical monitoring circuit coupled to the first electrode member (203) and/or to the second electrode member (201) for monitoring an electrical signal at at least a part of the gel strips (500) separately from the remaining gel strips (500), wherein the electrical monitoring circuit is adapted to detect an operation state and/or to control or regulate an operation of the gel electrophoresis device (100) based on one or more electrical signals monitored by the electrical monitoring circuit;
the gel electrophoresis device (100) comprises an electrical monitoring circuit coupled to the first electrode member (203) and/or to the second electrode member (201) for monitoring an electrical signal at at least a part of the gel strips (500) separately from the remaining gel strips (500), wherein the electrical monitoring circuit is adapted to detect an operation state and/or to control or regulate an operation of the gel electrophoresis device (100) based on one or more electrical signals monitored by the electrical monitoring circuit, wherein detecting an operation state and/or controlling or regulating an operation of the gel electrophoresis device (100) includes at least one of the group consisting of
detecting a dehydration of at least one of the gel strips (500),
rehydrating at least one of the gel strips (500),
detecting a short circuit in at least one of the gel strips (500),
detecting a number of gel strips (500) being present in the gel electrophoresis device (100),
detecting at least one measurement parameter,
diagnosing an error in the gel electrophoresis device (100),
adjusting at least one buffer concentration in the gel electrophoresis device (100), and
terminating a measurement in at least one of the gel strips (500) of the gel electrophoresis device (100).

9. The gel electrophoresis device (100) of claim 4 or any one of the above claims,
comprising one or more insert element receptions (101, 102), wherein each of the one or more insert element receptions (101, 102) is adapted to removably receive an insert element (200) forming the carrier element.

10. The gel electrophoresis device (100) of claim 9,
wherein the first electrode member (203) and/or the second electrode member (201) is or are removably attachable to the insert element (200).

11. A method of operating a gel electrophoresis device (100), the method comprising the steps of
receiving gel strips (500) in at least two gel strip receptions (401) of a carrier element;
electrically contacting the at least two gel strips (500) individually by means of a first electrode member (203) so that each electrical signal of the at least two gel strips (500) is controllable and/or monitorable separately.

12. The method of claim 11,
wherein the at least two gel strips (500) are electrically contacted individually by means of a second electrode member (201) so that each electrical signal of the at least two gel strips (500) is controllable and/or monitorable separately.

## Amended claims

### Amended claims in accordance with Rule 86(2) EPC.

**1.** A gel electrophoresis device (100), comprising
a first electrode member (203) adapted to provide an electrical contact with at least two gel strips (500) individually, so that each electrical signal of the at least two gel strips (500) is controllable and/or monitorable separately, and
an electrical monitoring circuit coupled to the first electrode member (203) for monitoring an electrical signal at at least a part of the gel strips (500), wherein the electrical monitoring circuit is adapted to provide at least one of detecting, controlling and regulating an operation of the gel electrophoresis device (100) based on one or more electrical signals monitored by the electrical monitoring circuit.

**2.** The gel electrophoresis device (100) of claim 1, comprising at least one of the following features:
a first housing (1000) in which the first electrode member (203) is arranged;
the first electrode member (203) is adapted to provide the electrical contact with the at least two gel strips (500) by means of contact springs (702) provided individually for at least a part of the at least two gel strips (500).

**3.** The gel electrophoresis device (100) of claim 1 or any one of the above claims, comprising at least one of the following features:
the first electrode member (203) is adapted to provide the electrical contact with at least three gel strips (500), wherein at least two of the at least three gel strips (500) are combinable to a group of gel strips (500), wherein the first electrode member (203) is adapted to provide an electrical contact concurrently with the at least two gel strips (500) combined to a group so that the electrical signals of the at least two gel strips (500) combined to a group are controllable and/or monitorable in common;
the first electrode member (203) is adapted to provide an electrical contact with a number M of gel strips (500), the electrode arrangement comprises a switch unit adapted to control a number N of at least two measurement channels, wherein M>N, wherein the switch unit is adapted to selectively electrically interconnect the M gel strips (500) to groups and to connect each of the groups to an assigned one of the N measurement channels.

**4.** The gel electrophoresis device (100) of claim 1 or any one of the above claims, comprising a second electrode member (201) adapted to provide an electrical contact with the at least two gel strips (500), further comprising at least one of:
the second electrode member (201) is adapted to provide the electrical contact with the at least two gel strips (500) individually, so that each electrical signal of the at least two gel strips (500) is controllable and/or monitorable separately;
the second electrode member (201) is adapted to provide an electrical contact with at least two gel strips (500) concurrently, so that the electrical signals of the at least two gel strips (500) are controllable and/or monitorable in common;
a second housing (701) in which the second electrode member (201) is arranged;
the electrical monitoring circuit is coupled to the second eledrode member (201).

**5.** The gel electrophoresis device (100) of claim 1 or any one of the above claims, comprising at least one of the following features:
the first electrode member (203) and/or the second electrode member (201) is or are removably attachable to a carrier element, preferably by a magnetic attachment element (700, 1500);
the first electrode member (203) and/or the second electrode member (201) is or are shiftable along gel strip receptions (401);
an electrical control circuit coupled to the first electrode member (203) and/or to the second electrode member (201) for applying an electrical signal to at least a part of the gel strips (500) separately from the remaining gel strips (500);
the electrical monitoring circuit coupled to the first electrode member (203) and/or to the second electrode member (201) is adapted for monitoring the electrical signal at the part of the gel strips (500) separately from the remaining gel strips (500).

**6.** The gel electrophoresis device (100) of claim 1 or any one of the above claims, wherein the detecting, controlling and regulating an operation of the gel electrophoresis device (100) includes at least one of the group consisting of:
detecting a dehydration of at least one of the gel strips (500),
rehydrating at least one of the gel strips (500),
detecting a short circuit in at least one of the gel strips (500),
detecting a number of gel strips (500) being present in the gel electrophoresis device (100),
detecting at least one measurement parameter,
diagnosing an error in the gel electrophoresis device (100),
adjusting at least one buffer concentration in the gel electrophoresis device (100), and
terminating a measurement in at least one of the gel strips (500) of the gel electrophoresis device (100).

**7.** The gel electrophoresis device (100) of claim 1 or any one of the above claims, comprising at least one of:
one or more insert element receptions (101, 102), wherein each of the one or more insert element receptions (101, 102) is adapted to removably receive an insert element (200) forming the carrier element, wherein preferably the first electrode member (203) and/or the second electrode member (201) is or are removably attachable to the insert element (200);
the gel electrophoresis device (100) is adapted for fluid separation by means of an applied electric field;
a carrier element having at least two gel strip receptions (401), wherein each of the at least two gel strip receptions (401) is adapted to receive a gel strip (500).

**8.** A method of operating a gel electrophoresis device (100), the method comprising the steps of
receiving gel strips (500) in at least two gel strip receptions (401) of a carrier element;
electrically contacting the at least two gel strips (500) individually by means of a first electrode member (203) so that each electrical signal of the at least two gel strips (500) is controllable and/or monitorable separately.
monitoring an electrical signal at at least a part of the gel strips (500), and
providing at least one of detecting, controlling and regulating an operation of the gel electrophoresis device (100) based on the monitored electrical signal.

**9.** A gel electrophoresis device (100), comprising
a carrier element having a plurality of gel strip receptions (401), each being adapted to receive a gel strip (500), and
a first electrode member (203) adapted to provide an electrical contact with at least two gel strips (500) individually, so that each electrical signal of the at least two gel strips (500) is controllable and/or monitorable separately, wherein the first electrode member (203) is shiftable along the gel strip receptions (401).
